(19) **Europäisches Patentamt / European Patent Office / Office européen des brevets**

(11) **EP 4 620 592 A1**

(12) **EUROPEAN PATENT APPLICATION**
published in accordance with Art. 153(4) EPC

(43) Date of publication:
24.09.2025  Bulletin 2025/39

(21) Application number: 22965691.3

(22) Date of filing: 14.11.2022

(51) International Patent Classification (IPC):
**B21D 22/26** (2006.01)  **B21D 22/20** (2006.01)
**B62D 25/04** (2006.01)

(52) Cooperative Patent Classification (CPC):
**B21D 22/20; B21D 22/26; B62D 25/04**

(86) International application number:
**PCT/JP2022/042159**

(87) International publication number:
**WO 2024/105714 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: NIPPON STEEL CORPORATION
Chiyoda-ku
Tokyo 100-8071 (JP)

(72) Inventors:
• **Kubo, Masahiro**
  **Tokyo 100-8071 (JP)**
• **Suzuki, Toshiya**
  **Tokyo 100-8071 (JP)**

(74) Representative: **Zimmermann & Partner Patentanwälte mbB**
**Postfach 330 920**
**80069 München (DE)**

(54) **STRUCTURAL MEMBER AND METHOD FOR MANUFACTURING SAME**

(57)    A method for manufacturing a structural member (10, 10A, 10B) includes a heating step of heating a starting material (M) made of a metal sheet and a shaping step of shaping the heated starting material (M) into the structural member (10, 10A, 10B) using a die (20). The die (20) includes a lower die (21), a pad (23), and upper dies (22). A top surface (211) of the lower die (21) includes a top surface body (211A) and projecting portions (211B). The pad (23) faces the top surface body (211A). In the shaping step, while the starting material (M) is sandwiched between the top surface body (211A) and the pad (23), and the starting material (M) is not sandwiched between the projecting portions (211B), the upper dies (22), and the pad (23), the upper dies (22) and the lower die (21) are moved relatively toward each other to press the starting material (M).

FIG. 3B

**Description**

TECHNICAL FIELD

The present disclosure relates to a structural member for automobiles and a method for manufacturing the same.

BACKGROUND ART

Automobiles are made up of a large number of structural members. Examples of the structural members include a pillar, a side member, a side sill, a cross member, a floor panel, a roof panel, and the like. The structural members are produced by, for example, performing press working on metal sheets. Patent Literatures 1 to 3 disclose manufacturing methods for shaping a metal sheet into a structural member using a die that includes an upper die and a lower die.

In the manufacturing method of Patent Literature 1, first, a metal sheet is placed on a lower die, and the metal sheet is pressed by a pad. Next, an upper die is moved toward the lower die, and the metal sheet is pressed between the upper die and the lower die while one longitudinal edge of the metal sheet is moved in-plane, thus shaping the metal sheet into a structural member. In Patent Literature 1, a center pillar (B-pillar) is described as an example of a structural member manufactured with this manufacturing method.

Patent Literature 2 discloses a manufacturing method suited to structural members such as a side member, a side sill, and a cross member. The structural member to be manufactured in Patent Literature 2 has a substantially hat-shaped transverse cross section. That is, the structural member includes a top plate, two vertical walls, and two flanges. Outward flanges rising from the top plate and the vertical walls are provided at the longitudinal ends of the structural member. In Patent Literature 2, the outward flanges and the other portions are shaped by the same lower die. In Patent Literature 2, shaping of the structural member is started in a state where at least regions of a metal sheet that are to become the outward flanges and regions near such regions are spaced apart from the top surface of the lower die.

Patent Literature 3 discloses a method for manufacturing a structural member having a T shape (T-shaped component), such as a cross member. The T-shaped component includes a top plate having a T shape, vertical walls continuous with the top plate, and flanges continuous with lower ends of the vertical walls. The top plate includes a vertical portion and horizontal portions connected to the vertical portion.

The manufacturing method of Patent Literature 3 includes a first shaping step of shaping a metal sheet into an intermediate shape component, a trimming step of trimming the intermediate shape component to obtain a trimmed component, and a second shaping step of shaping the trimmed component into a T-shaped component by using a die that includes an upper die and a lower die. In the first shaping step, protrusion portions are formed in parts of the vertical portion of the top plate that are adjacent to the horizontal portions. Additionally, in the first shaping step, a curved R portion is formed so that the connection region between a portion of the vertical wall continuous with the horizontal portion of the top plate and the flange is raised. The protrusion portions and the curved R portion are squashed by the upper die in the second shaping step.

CITATION LIST

PATENT LITERATURE

Patent Literature 1: JP 6436166B
Patent Literature 2: JP 5958644B
Patent Literature 3: JP 2019-013952A

SUMMARY OF INVENTION

TECHNICAL PROBLEM

For example, as described in Patent Literature 1 and Patent Literature 3, some structural members for automobiles have a T-shape in a plan view. The top plate of such a structural member includes a top plate body that extends in the longitudinal direction of the structural member, and projecting portions that project from the top plate body in the width direction of the structural member. The vertical walls of the structural member are provided so as to be continuous with the top plate body and the projecting portions. The structural member is also provided with flanges extending from the vertical walls in the width direction of the structural member. The flanges are connected to the vertical walls on the side opposite to the top plate.

When such a structural member is manufactured by press working, cracks may form in the vertical walls. More specifically, during press working, a crack can easily form at the edge of a vertical wall in the portion of the vertical wall that is continuous with a projecting portion of the top plate and extends in the height direction of the structural member. Furthermore, a crack may form at the connection between the flange and the portion of the vertical wall that extends in the height direction of the structural member. Cracks that form during press working can particularly easily form when the structural member is formed from a steel sheet that has high tensile strength.

An object of the present disclosure is to suppress the formation of a crack in the manufacture of a structural member for automobiles, in particular, to suppress the formation of a crack at the edge of a vertical wall in the portion of the vertical wall that extends in the height direction of the structural member, and at the connection between the vertical wall and a flange.

SOLUTION TO PROBLEM

A manufacturing method according to an aspect of the present disclosure is a manufacturing method for manufacturing a structural member for automobiles. This manufacturing method includes a heating step of heating a starting material made of a metal sheet, and a shaping step of shaping the heated starting material into the structural member using a die. The die includes a lower die, a pad, and an upper die. The lower die includes a top surface, a shoulder portion, a side surface, and a flange surface. The top surface includes a top surface body and a projecting portion. The projecting portion projects outward from a side edge of the top surface body. The shoulder portion is continuous with the side edge of the top surface body and the projecting portion. The side surface is connected to the top surface body and the projecting portion via the shoulder portion. The flange surface is connected to the side surface on a side opposite to the top surface. The pad faces the top surface body. The upper die is disposed on a lateral side of the pad. In the shaping step, while the starting material is sandwiched between the top surface body and the pad, and the starting material is not sandwiched between the projecting portion, the upper die, and the pad, the upper die and the lower die are moved relatively toward each other to press the starting material with the upper die, the shoulder portion, the side surface, and the flange surface.

ADVANTAGEOUS EFFECTS OF INVENTION

According to the present disclosure, the formation of a crack can be suppressed in the manufacture of a structural member for automobiles. According to the present disclosure, in the manufacture of a structural member for automobiles, it is possible to suppress the formation of a crack particularly at the edge of a vertical wall in the portion of the vertical wall that extends in the height direction of the structural member, and at the connection between the vertical wall and a flange.

BRIEF DESCRIPTION OF DRAWINGS

[FIG. 1] FIG. 1 is a perspective view of a structural member according to a first embodiment.
[FIG. 2] FIG. 2 is a transverse cross sectional view of the structural member illustrated in FIG. 1.
[FIG. 3A] FIG. 3A is a schematic diagram for describing a method for manufacturing the structural member.
[FIG. 3B] FIG. 3B is a schematic diagram for describing the method for manufacturing the structural member.
[FIG. 3C] FIG. 3C is a schematic diagram for describing the method for manufacturing the structural member.
[FIG. 3D] FIG. 3D is a schematic diagram for describing the method for manufacturing the structural member.
[FIG. 3E] FIG. 3E is a schematic diagram for describing the method for manufacturing the structural member.
[FIG. 3F] FIG. 3F is a schematic diagram for describing the method for manufacturing the structural member.
[FIG. 3G] FIG. 3G is a schematic diagram for describing the method for manufacturing the structural member.
[FIG. 3H] FIG. 3H is a schematic diagram for describing the method for manufacturing the structural member.
[FIG. 4] FIG. 4 is a partial enlarged view of the structural member illustrated in FIG. 1.
[FIG. 5] FIG. 5 is a partial enlarged view of the structural member illustrated in FIG. 1.
[FIG. 6] FIG. 6 is a perspective view of a structural member according to a second embodiment.
[FIG. 7] FIG. 7 is a perspective view of a structural member according to a modified example of the second embodiment.
[FIG. 8] FIG. 8 is a perspective view of a structural member according to a third embodiment.
[FIG. 9] FIG. 9 is a plan view of a starting material used in press-shaping the structural member illustrated in FIG. 8.
[FIG. 10] FIG. 10 is a perspective view of a die used in a manufacturing method according to a fourth embodiment.
[FIG. 11] FIG. 11 is a transverse cross sectional view of the die illustrated in FIG. 10.
[FIG. 12] FIG. 12 is a perspective view of a die according to a modified example of the embodiments.

[FIG. 13] FIG. 13 is a graph obtained by analysis and showing the relationship between the sheet thickness reduction rate and the distance from the end on the top plate side of the edge of a vertical wall included in a structural member.
[FIG. 14] FIG. 14 is a schematic diagram for describing analysis conditions.

DESCRIPTION OF EMBODIMENTS

A manufacturing method according to an embodiment is a manufacturing method for manufacturing a structural member for automobiles. This manufacturing method includes a heating step of heating a starting material made of a metal sheet, and a shaping step of shaping the heated starting material into the structural member using a die. The die includes a lower die, a pad, and an upper die. The lower die includes a top surface, a shoulder portion, a side surface, and a flange surface. The top surface includes a top surface body and a projecting portion. The projecting portion projects outward from a side edge of the top surface body. The shoulder portion is continuous with the side edge of the top surface body and the projecting portion. The side surface is connected to the top surface body and the projecting portion via the shoulder portion. The flange surface is connected to the side surface on a side opposite to the top surface. The pad faces the top surface body. The upper die is disposed on a lateral side of the pad. In the shaping step, while the starting material is sandwiched between the top surface body and the pad, and the starting material is not sandwiched between the projecting portion, the upper die, and the pad, the upper die and the lower die are moved relatively toward each other to press the starting material with the upper die, the shoulder portion, the side surface, and the flange surface (first configuration).

In the manufacturing method according to the first configuration, the structural member is shaped from the starting material using the die that includes the upper die, the lower die, and the pad. The top surface of the lower die is provided with the top surface body and the projecting portion that projects outward from the top surface body. In the shaping step, while the starting material is sandwiched between the top surface body of the lower die and the pad, and the starting material is not sandwiched between the projecting portion of the top surface of the lower die and the pad, the heated starting material is pressed by the upper die and the lower die. In this case, the portion of the starting material that corresponds to the projecting portion of the top surface of the lower die, in other words, the portion that is to be shaped into the projecting portion of the top plate of the structural member, is not restrained by the die. Accordingly, the portion of the starting material that is to be shaped into the projecting portion of the top plate is not likely to be cooled by the die, and material can flow in that portion during shaping of the structural member. The material flows from the portion that is to become the projecting portion of the top plate toward the portion that is to become the vertical wall (the portion that is shaped along the side surface of the lower die). Accordingly, it is possible to suppress the formation of a crack in the structural member. In particular, it is possible to suppress the formation of a crack at the edge of the vertical wall in the portion of the vertical wall that is continuous with the projecting portion of the top plate and extends in the height direction of the structural member, and at the connection between the vertical wall and the flange.

For example, if a crack forms at the edge of the vertical wall during the shaping step, it is necessary to carry out a trimming step after the shaping step to laser cut the outer periphery of the shaped product to remove the cracked portion. In contrast, in the manufacturing method according to the first configuration, the projecting portion of the top plate is not restrained by the die, therefore making it possible to suppress the formation of a crack at the edge of the vertical wall during the shaping step. Therefore, a trimming step is not required after the shaping step. If the trimming step is not required, the size of the starting material input to the shaping step can be reduced compared to the case where the trimming step is performed. Therefore, the yield in the manufacture of the structural member can be improved. Furthermore, since the size of the input starting material is reduced and the trimming step is not performed, the transportation load and the amount of electricity required for the manufacture of the structural member are reduced, and the amount of greenhouse gas emissions can also be reduced.

The lower die may include a first lower die and a second lower die. The second lower die is adjacent to the first lower die. The second lower die includes the projecting portion of the top surface. By providing a height difference in advance between the first lower die and the second lower die, when the upper die and the lower die are moved relatively toward each other, the starting material can be pressed between the first lower die and the upper die before being pressed between the second lower die and the upper die (second configuration).

In the second configuration, the lower die includes the first die and the second die that is separate from the first die. Due to a height difference being provided in advance between the first die and the second die, when shaping the structural member, the first die comes into contact with the starting material before the second die, which includes the projecting portion of the top surface, comes into contact with the starting material. In this case, the portion of the starting material that corresponds to the projecting portion of the top surface of the lower die (i.e., the portion that is to be shaped into the projecting portion of the top plate of the structural member) and the vicinity thereof are even less likely to be restricted, thereby further promoting the flow of material from the top plate side toward the vertical wall. Therefore, it is possible to further suppress the formation of a crack at the edge of the vertical wall in the portion of the vertical wall that extends in the height direction and at the connection between the vertical wall and the flange.

The first lower die may be configured to move upward and downward due to a cushion mechanism. In this case, in the shaping step, the upper die can be lowered toward the first lower die and the second lower die (third configuration).

A structural member according to an embodiment is a structural member for automobiles. The structural member includes a top plate, a ridgeline portion, a vertical wall, and a flange. The top plate includes a top plate body and a projecting portion. The projecting portion projects outward from a side edge of the top plate body. The ridgeline portion is continuous with the side edge of the top plate body and the projecting portion. The vertical wall is connected to the top plate body and the projecting portion via the ridgeline portion. The flange is connected to the vertical wall on a side opposite to the top plate. The flange projects from the vertical wall in a direction outward from the structural member. When T [%] is a sheet thickness reduction rate based on a sheet thickness of the top plate body, at an edge of the vertical wall in a portion of the vertical wall continuous with the projecting portion, a length of a region of the edge in which the sheet thickness reduction rate T satisfies the following formula is 2.0 times or more the sheet thickness of the top plate body (fourth configuration).

$$0.9 \times Tmax \leq T \leq Tmax$$

where Tmax [%] is a maximum value of the sheet thickness reduction rate at the edge of the vertical wall in the portion of the vertical wall continuous with the projecting portion.

In the structural member according to the fourth configuration, at the edge of the vertical wall in the portion of the vertical wall that is continuous with the projecting portion of the top plate, the length of the region of the edge that satisfies the above formula is 2.0 times or more the sheet thickness of the top plate body. This means that the sheet thickness distribution is made relatively uniform at the edge of the vertical wall in the portion of the vertical wall that is continuous with the projecting portion of the top plate, or in other words, in the portion of the vertical wall that extends in the height direction of the structural member. In this case, when the structural member is in use, stress is less likely to concentrate in a reduced sheet thickness portion of the edge of the vertical wall, and it is possible to suppress the formation of a crack at the edge of the vertical wall. In other words, it is possible to provide the structural member with excellent durability.

In the structural member according to the fourth configuration, a crack is less likely to form at the edge of the vertical wall. Therefore, for example, when joining the structural member to another member by spot welding, spot welding points can be formed in the vicinity of the edge of the vertical wall. This enables the structural member to be firmly joined to the other member, thus improving the capability for load transmission between the structural member and the other member.

An arithmetic mean roughness Ra at the edge of the vertical wall in the portion of the vertical wall continuous with the projecting portion may be 3.00 μm or less (fifth configuration).

The structural member may have a Vickers hardness of 325 Hv or more (sixth configuration).

Hereinafter, embodiments of the present disclosure will be described with reference to the drawings. In the drawings, the same or corresponding configurations are denoted by the same reference signs, and repeated descriptions will not be given.

<First Embodiment>

[Configuration of Structural Member]

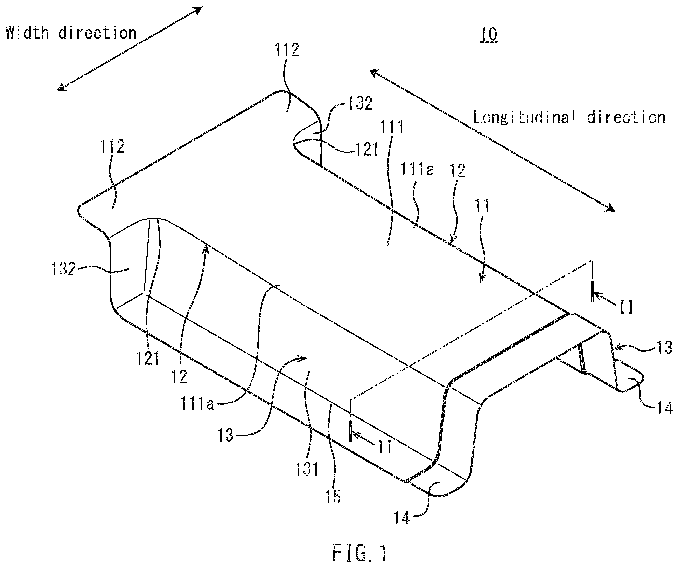

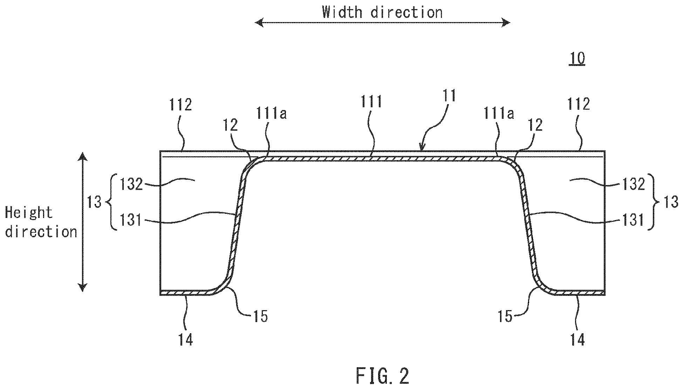

FIG. 1 is a perspective view of a structural member 10 according to a first embodiment. FIG. 2 is a transverse cross sectional view (cross sectional view taken along line II-II) of the structural member 10. The structural member 10 is used as a structural member for automobiles. The structural member 10 is, for example, a cross member disposed on the upper side of a floor panel or the lower side of a floor panel, or a cross extension provided at the end of a cross member.

As illustrated in FIG. 1, the structural member 10 includes a top plate 11, two ridgeline portions 12, two vertical walls 13, and two flanges 14.

The top plate 11 includes a top plate body 111 and two projecting portions 112. In the present embodiment, the top plate body 111 has an elongated shape in a plan view of the structural member 10. Hereinafter, the direction in which the top plate body 111 extends will be referred to as the longitudinal direction of the structural member 10, and the direction substantially perpendicular to the longitudinal direction in a plan view of the structural member 10 will be referred to as the width direction of the structural member 10. Also, a direction substantially perpendicular to the longitudinal direction and the width direction will be referred to as the height direction of the structural member 10.

The top plate body 111 includes two side edges 111a. The side edges 111a each extend in the longitudinal direction of the structural member 10. One projecting portion 112 is provided adjacent to each of the side edges 111a.

The projecting portions 112 project outward in the width direction of the structural member 10, from the side edges 111a of the top plate body 111. The projecting portions 112 are provided on one end portion in the longitudinal direction of the top plate body 111. Due to including the top plate body 111 and the two projecting portions 112, the top plate 11 is substantially T-shaped in a plan view of the structural member 10. The projecting portions 112 are located, for example, substantially or approximately on the same plane as the top plate body 111.

The ridgeline portions 12 are continuous with the side edges 111a of the top plate body 111. The ridgeline portions 12 are also continuous with the projecting portions 112 of the top plate 11. The ridgeline portions 12 extend from the top plate body 111 to the projecting portions 112. Each of the ridgeline portions 12 has a corner portion 121 between a portion mainly corresponding to the top plate body 111 and a portion corresponding to the projecting portion 112. In a plan view of the structural member 10, the corner portion 121 has a radius of curvature of, for example, 5.0 mm or more and 100.0 mm or less. The radius of curvature of the corner portion 121 in a plan view of the structural member 10 is preferably 5.0 mm or more and 50.0 mm or less, and more preferably 5.0 mm or more and 25.0 mm or less. As illustrated in FIG. 2, each of the ridgeline portions 12 has, for example, a substantially arcuate shape in a transverse cross sectional view of the structural member 10.

As illustrated in FIGS. 1 and 2, each of the vertical walls 13 includes a first portion 131 and a second portion 132. The first portion 131 is connected to the side edge 111a of the top plate body 111 via the ridgeline portion 12. The first portion 131 extends along the top plate body 111 in the longitudinal direction of the structural member 10. The first portion 131 of one of the vertical walls 13 faces the first portion 131 of the other vertical wall 13 in the width direction of the structural member 10. The second portion 132 is connected to the projecting portion 112 of the top plate 11 via the ridgeline portion 12. The second portion 132 extends in the height direction of the structural member 10 from the projecting portion 112 of the top plate 11 to the flange 14.

As illustrated in FIGS. 1 and 2, the flanges 14 are connected to the vertical walls 13 on the side opposite to the top plate 11. The flanges 14 are connected to the vertical walls 13 via the ridgeline portions 15. The ridgeline portions 15 extend along the first portions 131 and the second portions 132 of the vertical walls 13. Each of the ridgeline portions 15 has, for example, a substantially arcuate shape in a transverse cross sectional view of the structural member 10.

The flanges 14 project from the vertical walls 13 in directions outward from the structural member 10. More specifically, the flanges 14 project from the first portions 131 of the vertical walls 13 in directions outward in the width direction of the structural member 10. The flanges 14 extend in the longitudinal direction of the structural member 10 along the first portions 131 of the vertical walls 13, and are connected to the second portions 132 of the vertical walls 13.

[Method for Manufacturing Structural Member]

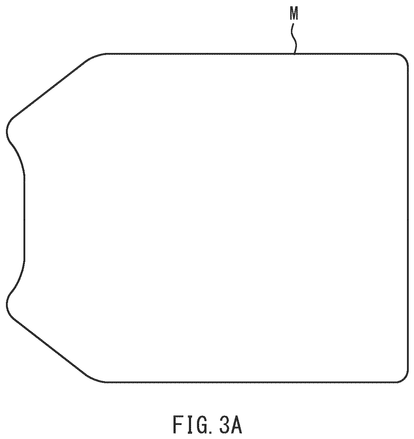

A method for manufacturing the structural member 10 will be described below with reference to FIGS. 3A to 3H. FIGS. 3A to 3H are schematic diagrams for describing the method for manufacturing the structural member 10. The method for manufacturing the structural member 10 includes a step of preparing a starting material M, a step of heating the starting material M, and a step of shaping the heated starting material M into the structural member 10. The structural member 10 is manufactured by hot shaping (hot stamping).

(Preparation Step)

As illustrated in FIG. 3A, in the preparation step, the starting material M made of a metal sheet is prepared. The starting material M may be made of a steel sheet. The starting material M is, for example, a blank corresponding to the structural member 10 in a flat unshaped state (FIGS. 1 and 2). Such a blank can be formed by punching a metal band (coil) using a die of the desired shape. Alternatively, the blank may be formed by cutting the coil with a laser.

(Heating Step)

The heating step is a step of heating the prepared starting material M. In the heating step, the starting material M is heated to a temperature suitable for hot stamping. The starting material M is heated by, for example, a known heating furnace.

(Shaping Step)

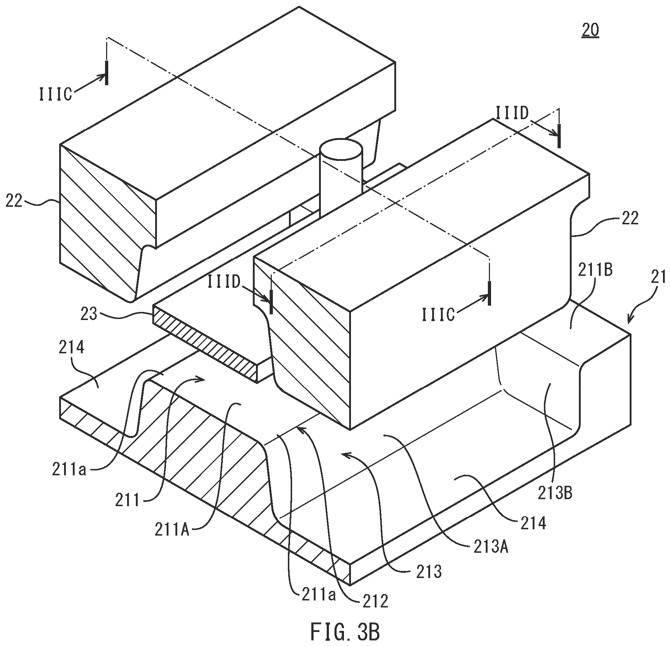

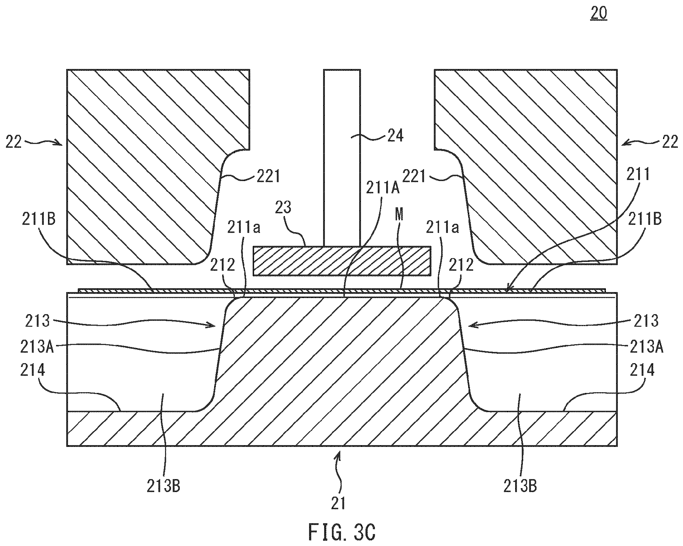

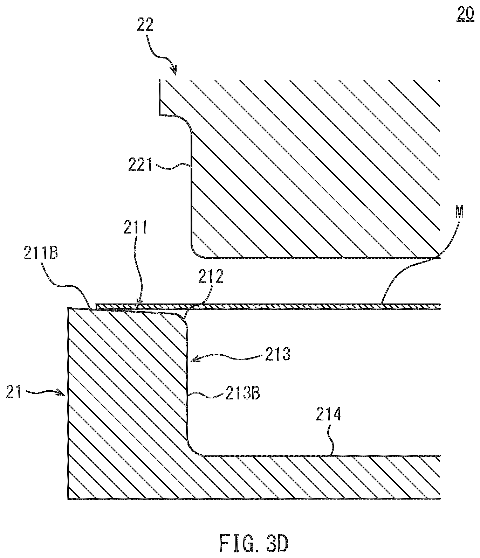

The heated starting material M is transferred to a die 20 illustrated in FIGS. 3B to 3D. In the shaping step, the die 20 is used to shape the heated starting material M into the structural member 10 (FIGS. 1 and 2). First, the configuration of the die 20 will be described with reference to FIGS. 3B to 3D. FIG. 3B is a perspective view of the die 20. FIG. 3C is a transverse cross sectional view (cross sectional view taken along line IIIC-IIIC) of the die 20. FIG. 3D is a vertical cross sectional view (cross sectional view taken along line IIID-IIID) of the die 20.

Referring to FIG. 3B, the die 20 includes a lower die 21, two upper dies 22, and a pad 23. The lower die 21 is a punch, and the upper dies 22 are the die that corresponds to the lower die 21. At the start of the shaping step, the lower die 21 faces the upper dies 22 and the pad 23. The lower die 21 is disposed, for example, below the upper dies 22 and the pad 23. The lower die 21, the upper dies 22, and the pad 23 are attached to, for example, a known press machine (not shown).

Referring to FIGS. 3B and 3C, the lower die 21 includes a top surface 211, two shoulder portions 212, two side surfaces 213, and two flange surfaces 214.

The top surface 211 is the upward-facing surface that faces the pad 23. The top surface 211 is a surface for forming the top plate 11 (FIGS. 1 and 2) of the structural member 10. Therefore, the top surface 211 has a shape corresponding to the top plate 11. The top surface 211 corresponds to the top plate 11 and is substantially T-shaped in a plan view of the lower die 21.

The top surface 211 includes a top surface body 211A and two projecting portions 211B. The top surface body 211A corresponds to the top plate body 111 of the structural member 10 (FIGS. 1 and 2), and has an elongated shape in a plan view of the lower die 21. Hereinafter, the direction in which top surface body 211A extends will be referred to as the longitudinal direction of the die 20, and the direction substantially perpendicular to the longitudinal direction in a plan view of the die 20 will be referred to as the width direction of the die 20. Moreover, the direction substantially perpendicular to the longitudinal direction and the width direction will be referred to as the height direction of the die 20. The longitudinal direction, the width direction, and the height direction of the die 20 respectively coincide with the longitudinal direction, the width direction, and the height direction of the structural member 10.

The top surface body 211A includes two side edges 211a. These side edges 211a are side edges that extend in the longitudinal direction of the top surface body 211A. A projecting portion 211B is provided adjacent to each of the side edges 211a.

The projecting portions 211B correspond to the projecting portions 112 (FIGS. 1 and 2) of the top plate 11 of the structural member 10, and project outward from the side edges 211a of the top surface body 211A. The projecting portions 211B are provided at one longitudinal end of the top surface body 211A. The projecting portions 211B are, for example, located substantially or approximately on the same plane as the top surface body 211A.

The shoulder portions 212 are continuous with the side edges 211a of the top surface body 211A. The shoulder portions 212 are also continuous with the projecting portions 211B of the top surface 211. The shoulder portions 212 correspond to the ridgeline portions 12 (FIGS. 1 and 2) of the structural member 10, and extend from the top surface body 211A to the projecting portions 211B.

As illustrated in FIGS. 3C and 3D, each of the side surfaces 213 corresponds to the first portion 131 and the second portion 132 (FIGS. 1 and 2) of one of the vertical walls 13 of the structural member 10, and includes a first portion 213A and a second portion 213B. The first portion 213A is connected to the side edge 211a of the top surface body 211A via the shoulder portion 212, and extends in the longitudinal direction of the die 20. The second portion 213B is connected to the projecting portion 211B of the top surface 211 via the shoulder portion 212. The second portion 213B extends in the height direction of the lower die 21, from the projecting portion 211B of the top surface 211 to the flange surface 214.

The flange surfaces 214 are connected to the side surfaces 213 on the side opposite to the top surface 211. The flange surfaces 214 correspond to the flanges 14 of the structural member 10, and project from the side surfaces 213 in directions outward from the lower die 21. More specifically, the flange surfaces 214 project outward in the width direction of the die 20, from the first portions 213A of the side surfaces 213. The flange surfaces 214 extend in the longitudinal direction of the die 20 along the first portions 213A of the side surfaces 213, and are connected to the second portions 213B of the side surfaces 213.

As illustrated in FIGS. 3C and 3D, the two upper dies 22 are attached to a slide that can be raised and lowered in a press machine (not shown), for example. The upper dies 22 each include a shaping surface 221. The shaping surface 221 has a shape corresponding to the shoulder portion 212, the side surface 213, and the flange surface 214 of the lower die 21. The pad 23 is disposed between the two upper dies 22. That is, the upper dies 22 are disposed on opposite sides of the pad 23. These upper dies 22 may be separate bodies, or may be integrated as a single body.

The pad 23 is connected to a slide of a press machine (not shown) via an elastic member 24 that can stretch and contract, for example. The pad 23 faces the top surface body 211A of the lower die 21. The pad 23 does not face the projecting portions 211B of the top surface 211 of the lower die 21. That is, with respect to the width direction of the die 20, the pad 23 is disposed inward of the portions of the shoulder portions 212 of the lower die 21 that are continuous with the projecting portions 211B. The pad 23 is, for example, substantially I-shaped in a plan view of the die 20.

In the shaping step, the die 20 having the above-described configuration is used to shape the starting material M into the structural member 10 (FIGS. 1 and 2). In the shaping step, while the starting material M is sandwiched between the top surface body 211A of the lower die 21 and the pad 23, but substantially not sandwiched between the projecting portions 211B provided on the top surface 211 of the lower die 21 and the upper dies 22 and pad 23, the upper dies 22 and the lower die 21 are moved relatively toward each other, and the starting material M is pressed between the upper dies 22 and the shoulder portions 212, side surfaces 213, and flange surfaces 214 of the lower die 21. The shaping step will now be described in more detail.

As illustrated in FIGS. 3C and 3D, when starting the shaping step, the upper dies 22 and the pad 23 attached to the slide of the press machine (not shown) are positioned at top dead center. In this state, the starting material M that was heated in the heating step is placed on the top surface 211 of the lower die 21. Thereafter, the upper dies 22 and the pad 23 are lowered toward the lower die 21 together with the slide of the press machine, and thus the upper dies 22 and the pad 23 are moved toward the lower die 21.

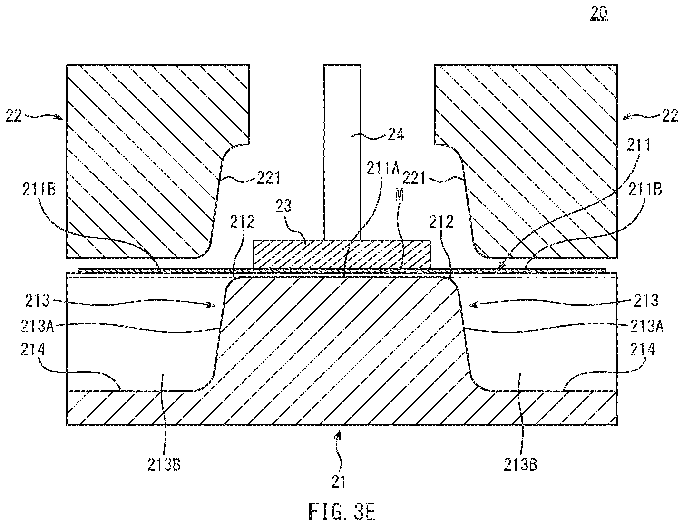

When the upper dies 22 and the pad 23 are moved toward the lower die 21, first, the starting material M on the lower die 21 is pressed down by the pad 23, as illustrated in FIG. 3E. More specifically, the portion of the starting material M located on the top surface body 211A of the lower die 21 is sandwiched between the lower die 21 and the pad 23. On the other hand, the portions of the starting material M located over the projecting portions 211B of the top surface 211 of the lower die 21 are not sandwiched between the lower die 21 and the pad 23.

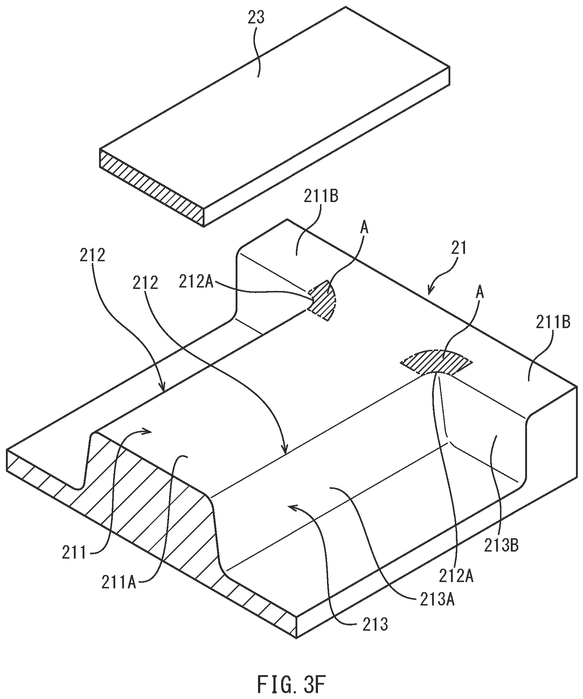

FIG. 3F is a schematic diagram for describing in more detail the portion of the starting material M (FIG. 3E) that is restrained by the pad 23. As illustrated in FIG. 3F, each of the shoulder portions 212 of the lower die 21 has a corner portion 212A mainly between a portion corresponding to the top surface body 211A and a portion corresponding to the projecting portion 211B. The lower die 21 includes a region A adjacent to the corner portion 212A when viewed along the pressing direction. As shown by hatching in FIG. 3F, the region A is a region extending inward in the top surface 211 from the corner portion 212A, with an extending length of up to 10 times the sheet thickness of the starting material M (FIG. 3E). The pad 23 is disposed so as to overlap at least a portion of the region A when viewed along the pressing direction (height direction). That is, at least a part of the range of the starting material M that faces, in the pressing direction, the region A adjacent to the corner portion 212A is pressed by the pad 23. On the other hand, the portion of the starting material M that is located outward of, in the width direction, the region A adjacent to the corner portion 212A of the lower die 21 are not pressed by the pad 23. That is, in the shaping step, the pad 23 does not restrain the portion of the starting material M that is located outward of, in the width direction, the end of the corner portion 212A on the projecting portion 211B side.

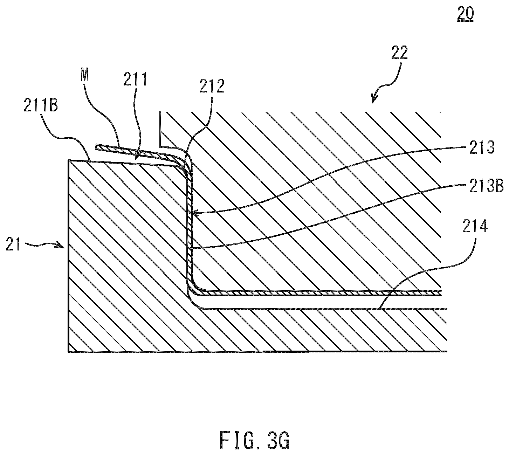

Returning to FIG. 3E, while the starting material M is sandwiched between the top surface body 211A of the lower die 21 and the pad 23, but not sandwiched between the projecting portions 211B of the top surface 211 of the lower die 21 and the pad 23, the slide of the press machine (not shown) is further lowered. Accordingly, the elastic member 24 connecting the pad 23 to the slide contracts, thus allowing the upper dies 22 to move downward relative to the pad 23. As a result, the upper dies 22 move closer to the lower die 21, and press-shaping of the starting material M by the upper dies 22 and the lower die 21 is started. As illustrated in FIG. 3G, the portions of the starting material M located on the projecting portions 211B of the top surface 211 of the lower die 21 become slightly separated from projecting portions 211B during shaping.

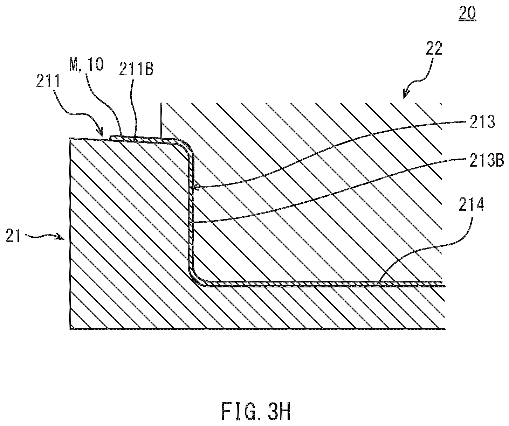

As illustrated in FIG. 3H, when the upper dies 22 reach bottom dead center, the upper dies 22 and the lower die 21 completely press the starting material M, and the structural member 10 is formed. The structural member 10 undergoes heat-removal (quenching) by contact with the die 20, and thus the strength of the structural member 10 is increased.

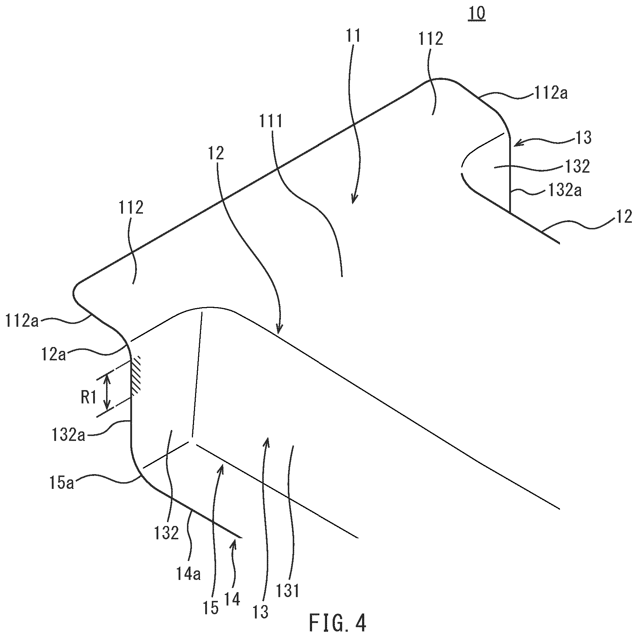

Referring to FIG. 4, in the structural member 10 after the shaping step, an edge 132a of the second portion 132 of each of the vertical walls 13 includes a deformation region R1. The deformation region R1 is within a range from the R end (on the vertical wall 13 side) of an edge 12a of the ridgeline portion 12 connecting an edge 112a of the projecting portion 112 of the top plate 11 and the edge 132a of the second portion 132 of the vertical wall 13, to the R end (on the vertical wall 13 side) of an edge 15a of the ridgeline portion 15 connecting the edge 132a of the second portion 132 of the vertical wall 13 and an edge 14a of the flange 14.

The entirety of the deformation region R1 has a sheet thickness reduction rate T [%] that satisfies Formula (1) shown below.

$$0.9 \times T_{max} \leq T \leq T_{max} \quad (1)$$

$T_{max}$ [%] in Formula (1) is the maximum value of the sheet thickness reduction rate T at the edge 132a of the second portion 132 of each of the vertical walls 13. The sheet thickness reduction rate T is a sheet thickness reduction rate that is based on the sheet thickness of the top plate body 111. Letting $t0$ be the sheet thickness of the top plate body 111, and $t1$ be the sheet thickness at an arbitrarily selected position on the edge 132a of each of the vertical walls 13, the sheet thickness reduction rate T [%] at the selected position can be obtained by $(t0-t1)/t0 \times 100$. The sheet thickness $t0$ of the top plate body 111 is the sheet thickness of a portion of the top plate body 111 where distortion due to shaping has not substantially occurred. In other words, the sheet thickness $t0$ is substantially equal to the sheet thickness of the starting material M before shaping. The sheet thickness $t0$ is measured at the center portion of the top plate body 111 which is a portion having a flat shape. The sheet thickness $t0$ is, for example, the sheet thickness of the top plate body 111 measured at a position 5 mm or more away from the ridgeline portion 12 or a longitudinal end of the top plate body 111. In the case where the top plate body 111 has a step, a protrusion, or a through hole, the sheet thickness $t0$ is the sheet thickness of the top plate body 111 measured at a position 5 mm or more away from not only the ridgeline portion 12 and the longitudinal end of the top plate body 111, but also 5 mm or more away from the step, the protrusion, and the through hole.

At the edge 132a of the second portion 132 of each of the vertical walls 13, the length of the deformation region R1 is 2.0 times or more the sheet thickness $t0$ of the top plate body 111. The length of the deformation region R1 is preferably 2.5 times or more the sheet thickness $t0$ of the top plate body 111. The length of the deformation region R1 may be 6.0 times or less the sheet thickness $t0$ of the top plate body 111.

The structural member 10 may have a Vickers hardness of 325 Hv or more. The Vickers hardness HV of the structural member 10 can be evaluated by the Vickers hardness of the top plate 11. For example, a Vickers hardness test in accordance with JIS Z 2244:2009 is performed using a commercially available measuring device (fully automatic Vickers hardness tester HV-100, manufactured by Mitutoyo Corporation) to measure the Vickers hardness [Hv] at any five points on the top plate 11. The average value of the Vickers hardnesses at the five points can be determined as the Vickers hardness HV of the structural member 10. The Vickers hardness of the top plate 11 is measured, for example, with a test force of 294.2 N (value of HV30) and a test force holding time of 15 seconds.

[Effects]

In the present embodiment, the structural member 10 is shaped from the starting material M using the die 20 that includes the lower die 21, the upper dies 22, and the pad 23. In the shaping step, while the portion of the starting material M located on the top surface body 211A of the lower die 21 is pressed by the pad 23, and the portions of the starting material M located on the projecting portions 211B of the lower die 21 are not pressed by the pad 23, the heated starting material M is pressed by the upper dies 22 and the lower die 21. In this case, the portions of the starting material M located on the projecting portions 211B of the lower die 21, that is, the portions that will become the projecting portions 112 of the top plate 11 of the structural member 10, are not restrained by the die 20. The portions of the starting material M that are to become the projecting portions 112 of the top plate 11 are separated from the die 20 during shaping. Therefore, in the shaping step, the projecting portions 112 of the top plate 11 are less likely to be cooled, and material flow can occur in the projecting portions 112. Material flows in the height direction of the structural member 10 from the projecting portions 112 of the top plate 11 toward the second portions 132 of the vertical walls 13. This makes it possible to suppress the formation of a crack in the structural member 10. In particular, it is possible to suppress the formation of a crack at the edge 132a of the second portion 132 of the vertical wall 13 that is continuous with the projecting portion 112 of the top plate 11 and at the connection between the second portion 132 of the vertical wall 13 and the flange 14.

For example, if cracking occurs at the edge of the vertical wall during the shaping step, as a countermeasure, a blank with excess padding can be used to mitigate the shape outside of the product when manufacturing the shaped product. In this case, it is necessary to perform a trimming step after the shaping step to laser cut the outer periphery of the shaped product to obtain the product shape. In contrast, in the present embodiment, the projecting portions 112 of the top plate 11 are not restrained by the die 20, thus making it possible to suppress the formation of cracks at the edges of the vertical walls 13 in the shaping step. Therefore, a trimming step is not required after the shaping step. If the trimming step is not required, the size of the starting material M input to the shaping step can be reduced compared to the case where the trimming step is performed. Therefore, the yield in the manufacture of the structural member 10 can be improved. Furthermore, since the size of the input starting material M is reduced and the trimming step is not performed, the transportation load and the amount of electricity required for the manufacture of the structural member 10 are reduced, and the amount of greenhouse gas emissions can also be reduced.

As described above, when manufacturing the structural member 10 by the manufacturing method of the present embodiment, there is no need to laser cut the outer periphery of the structural member 10 after the shaping step. Thus, the edges of the finished structural member 10 are smoother than the edges of a structural member that has been subjected to a trimming step involving laser cutting.

Laser cutting was performed on a structural member after performing the shaping step (hot stamping), an arithmetic mean roughness Ra of an edge (laser cut surface) created by performing laser cutting was measured, and the minimum arithmetic mean roughness Ra of the laser cut surface was 4.20 $\mu$m. In the case of other automobile parts as well, when the arithmetic mean roughness Ra of an edge (laser cut surface) created by performing laser cutting was measured, the arithmetic mean roughness Ra of the laser cut surface exceeded 3.00 $\mu$m.

In contrast, in the present embodiment, in the structural member 10 after the shaping step, laser cutting is not performed on the edge 132a of the second portion 132 of the vertical wall 13 and the edge 12a of the ridgeline portion 12 connecting the vertical wall 13 to the top plate 11. Therefore, the arithmetic mean roughness Ra of the edges 132a and 12a is significantly smaller than the arithmetic mean roughness Ra of surfaces that have been laser cut after the shaping step. More specifically, in the structural member 10, the arithmetic mean roughness Ra of the edge 132a of the second portion 132 of the vertical wall 13 is 3.00 $\mu$m or less. Similarly, the arithmetic mean roughness Ra of the edge 12a of the ridgeline portion 12 is 3.00 $\mu$m or less.

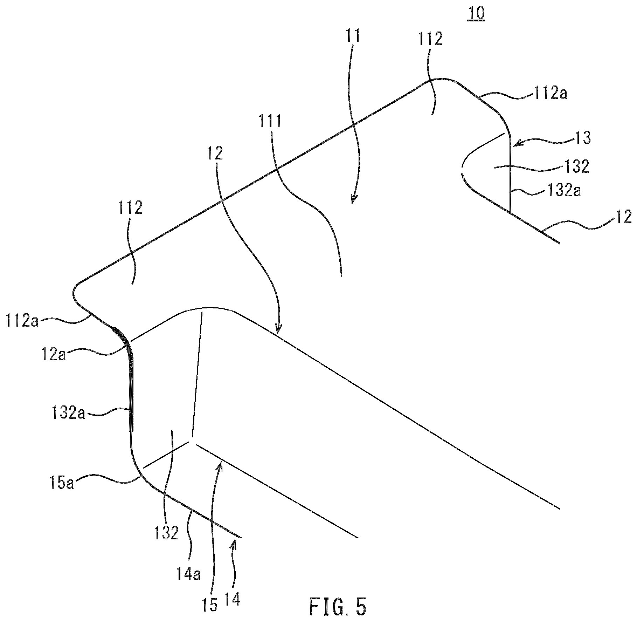

Referring to FIG. 5, the arithmetic mean roughness Ra of the edge 132a of the second portion 132 of the vertical wall 13 and the edge 12a of the ridgeline portion 12 can be measured using a commercially available surface roughness measuring device. More specifically, using a surface roughness measuring device (laser microscope, manufactured by Keyence Corporation) in accordance with JIS B 0601:2013, a roughness curve is created for a position 0.1 mm from the sheet upper surface in a region formed by the edge 132a of the vertical wall 13 and the edge 12a of the ridgeline portion 12 (the bold line region in FIG. 5), and the arithmetic mean roughness Ra can be obtained with an roughness curve evaluation length of 12.5 mm and a reference length of 2.5 mm. Similarly, using the above-mentioned surface roughness measuring device in accordance with JIS B 0601:2013, a roughness curve is created for a position at each of the sheet thickness center and a position 0.1 mm from the sheet lower surface in the region formed by the edge 132a of the vertical wall 13 and the edge 12a of the ridgeline portion 12, and the arithmetic mean roughness Ra can be obtained with a roughness curve evaluation length of 12.5 mm and a reference length of 2.5 mm. The obtained arithmetic mean roughness Ra is 3.00 μm or less in all cases.

In the structural member 10 according to the present embodiment, the second portion 132 of each of the vertical walls 13 has, at the edge 132a, the deformation region R1 that satisfies Formula (1). The length of the deformation region R1 is 2.0 times or more the sheet thickness t0 of the top plate body 111. This means that the sheet thickness distribution at the edge 132a of the second portion 132 of each of the vertical walls 13 is uniform. In this case, when the structural member 10 is used, stress concentration is less likely to occur at the sheet thickness reduced portion at the edge 132a of the second portion 132 of each of the vertical walls 13, and the formation of a crack at the edge 132a can be suppressed. That is, the structural member 10 can have excellent durability.

In the structural member 10 according to the present embodiment, localized reduction in sheet thickness is suppressed at the edge 132a of the second portion 132 of the vertical wall 13, thus making it less likely for a crack to form at the edge 132a. Therefore, for example, when joining the structural member 10 to another member by spot welding, a spot weld point can be formed in the vicinity of the edge 132a of the vertical wall 13. This enables the structural member 10 to be firmly joined to the other member, thus improving the capability for load transmission between the structural member 10 and the other member.

According to the manufacturing method of the present embodiment, when the starting material M is shaped into the structural member 10, the formation of a crack in the second portion 132 of the vertical wall 13 and in the vicinity thereof can be suppressed. Therefore, a high-strength material can be used to form the structural member 10. For example, the structural member 10 can be formed using a steel sheet having a tensile strength of 1000 MPa or more, or 2000 MPa or more after hot stamping. By forming the structural member 10 using a high-strength material, the strength of the structural member 10 can be ensured while also making the structural member 10 thin and lightweight.

In general, structural members formed by hot stamping are characterized in being hard in areas where the sheet thickness is not reduced during shaping, but having insufficient hardness in areas where the sheet thickness is reduced during shaping. Therefore, in the case of typical structural members, it is thought that deformation is concentrated in the portions where the sheet thickness is reduced, and cracks can possibly form depending on the degree of deformation concentration. However, in the structural member 10 according to the present embodiment, the sheet thickness distribution is made uniform as described above. That is, in the case of the structural member 10, the reduction in sheet thickness is dispersed, and localized decrease in hardness is suppressed. Therefore, it is possible to reduce the concentration of deformation during use of the structural member 10, and to improve the durability of the structural member 10.

When the structural member 10 according to the present embodiment is viewed from the top plate 11 side, the corner portion 121 of the ridgeline portion 12 has a radius of curvature of, for example, 100.0 mm or less, preferably 50.0 mm or less, and more preferably 25.0 mm or less. When the radius of curvature of the corner portion 121 is small, the intersection angle between the first portion 131 and the second portion 132 of the vertical wall 13 continuous with the ridgeline portion 12 can be, for example, approximately a right angle. This allows the structural member 10 to be excellent in terms of space efficiency. In other words, it is possible to increase the degree of freedom in terms of spatial arrangement with other components, and to reduce dimensional constraints in the design of the structural member 10 or other components. Furthermore, even if the region in which the structural member 10 is arranged is small, the load transmission capability of the structural member 10 can be ensured. Specifically, when a longitudinal load is input to the structural member 10 arranged in a small space, the surface of the second portion 132 of the vertical wall 13 can receive the load, thus making it easier for the load to be transmitted from the second portion 132 to other portion. Therefore, the structural member 10 can exhibit good transmission capability for loads in the longitudinal direction.

<Second Embodiment>

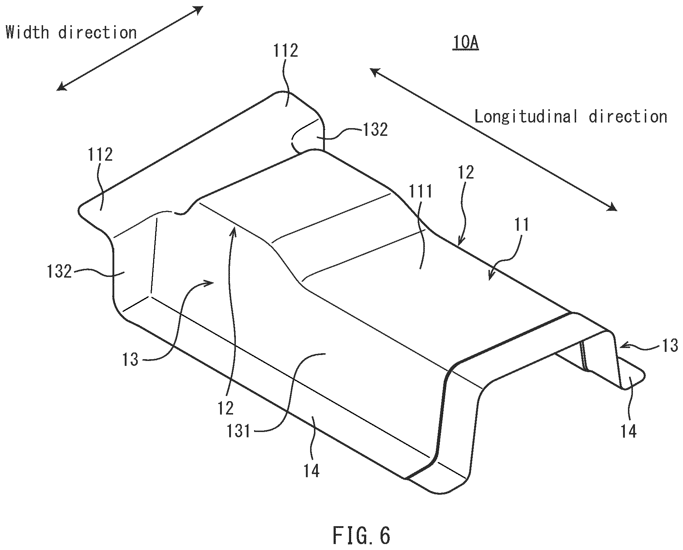

FIG. 6 is a perspective view of a structural member 10A according to a second embodiment. The basic configuration of the structural member 10A according to the present embodiment is the same as that of the structural member 10 according to the first embodiment. However, the structural member 10A differs from the structural member 10 according to the first embodiment in the shape of the top plate 11.

As illustrated in FIG. 6, in the structural member 10A, a portion of the top plate body 111 protrudes upward beyond other portions. The height of the vertical walls 13 varies in portions according to the shape of the top plate body 111.

The structural member 10A according to the present embodiment can also be manufactured by the manufacturing method described in the first embodiment. When manufacturing the structural member 10A, a pre-shaping step of forming an intermediate product from a metal sheet (blank) may be carried out prior to the shaping step. In the pre-shaping step, an intermediate product is formed from a metal sheet by, for example, drawing processing. For example, a raised portion of the top plate body 111 may be formed in the intermediate product. The intermediate product may be a product in which the projecting portions 112 of the top plate 11 and the second portions 132 of the vertical walls 13 are gently shaped. The pre-shaping step is typically carried out cold. In this case, the intermediate product obtained in the pre-shaping step is heated, and the heated intermediate product is provided as the starting material for the shaping step.

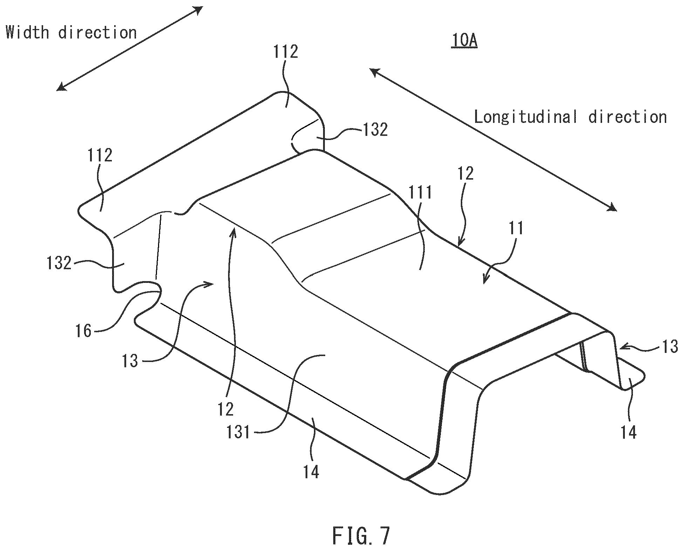

As illustrated in FIG. 7, the structural member 10A may have, for example, a notch 16 at the connection between the second portion 132 of the vertical wall 13 and the flange 14. The notch 16 may be provided on only one side in the width direction of the structural member 10A, or on both sides in the width direction. The notch 16 can be formed in advance in a starting material before the starting material is shaped into the structural member 10A. Although not shown, the structural member 10 according to the first embodiment (FIGS. 1 and 2) can also have the notch 16.

However, in order to prevent concentration of stress during use of the structural member 10 or 10A, it is preferable that the structural member 10 or 10A does not have a notch. In other words, it is preferable that the edges of the projecting portions 112 of the top plate 11, the vertical walls 13, and the flanges 14 are smoothly continuous. In this case, in addition to suppressing concentration of stress, it is possible to improve the load transmission capability of the structural member 10 or 10A during an automobile collision. Moreover, it is possible to suppress the entrance of water into the structural member 10 or 10A through a notch, and it is possible to suppress rusting of the structural member 10 or 10A.

<Third Embodiment>

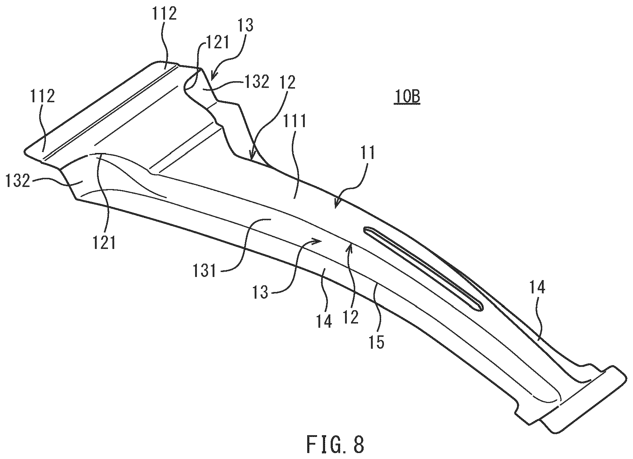

FIG. 8 is a perspective view of a structural member 10B according to a third embodiment. The structural member 10B of the present embodiment has a different shape from the structural members 10 and 10A of the above-described embodiments. The structural members 10 and 10A according to the above embodiments can be used as, for example, a cross member disposed on the upper side of a floor panel or the lower side of a floor panel, or as a cross extension provided at the end of a cross member. On the other hand, the structural member 10B according to the present embodiment can be used as, for example, a B-pillar.

As illustrated in FIG. 8, similarly to the structural members 10 and 10A according to the above-described embodiments, the structural member 10B includes the top plate 11 that has the top plate body 111 and the projecting portion 112. The structural member 10B also includes the vertical walls 13 that include the first portions 131 and the second portions 132, similarly to the structural members 10 and 10A. In the structural member 10B, the first portions 131 and the second portions 132 of the vertical walls 13 are connected to the top plate 11 and the flanges 14 via the ridgeline portions 12 and 15. Relative to the first portions 131 and the second portions 132 of the vertical walls 13, the flanges 14 are provided on the side opposite to the top plate 11.

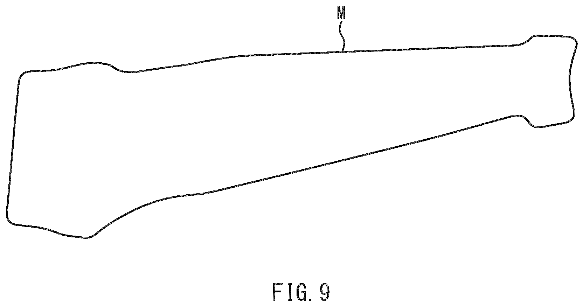

The structural member 10B according to the present embodiment can also be manufactured by the manufacturing method described in the first embodiment. When manufacturing the structural member 10B, a blank corresponding to the structural member 10B in a flat unshaped state can be prepared as the starting material M, as illustrated in FIG. 9. As described in the above embodiment, the blank may be formed by punching a metal band (coil) using a die, or may be formed by cutting out the metal band using a laser.

The structural member 10B is manufactured by the manufacturing method described in the first embodiment, and therefore, similarly to the structural members 10 and 10A according to the above embodiments, cracks are unlikely to form at, for example, the edges of the vertical walls 13 during the shaping step. Therefore, with the structural member 10B as well, a trimming step is not required after the shaping step. That is, after the shaping step, there is no need to laser cut the outer periphery of the structural member 10B. Therefore, in the structural member 10B, similarly to the structural members 10 and 10A according to the above-described embodiments, the arithmetic mean roughness Ra of the edge of the second portion 132 of the vertical wall 13 and the edge of the ridgeline portion 12 is 3.00 $\mu$m or less.

In the structural member 10B, the edge of the second portion 132 of each of the vertical walls 13 can have a deformation region R1 similar to that of the structural members 10 and 10A according to the above embodiments. The structural member 10B can have a Vickers hardness of 325 Hv or more, similarly to the structural members 10 and 10A according to the above embodiments.

In the structural member 10B according to the present embodiment, each of the ridgeline portions 12 includes the corner portion 121, similarly to the structural members 10 and 10A according to the above-described embodiments. In a plan view of the structural member 10B, the radius of curvature of the corner portion 121 is, for example, 20.0 mm or more and 300.0 mm or less. The radius of curvature of the corner portion 121 of the structural member 10B in a plan view is preferably 15.0 mm or more and 200.0 mm or less, and more preferably 15.0 mm or more and 100.0 mm or less. When the radius of curvature of the corner portion 121 is small, effects similar to those of the structural members 10 and 10A according to the other embodiments can be achieved. In other words, the intersection angle between the first portion 131 and the second portion 132 of the vertical wall 13 continuous with the ridgeline portion 12 can be set to a right angle or an angle close to a right angle, thus allowing the structural member 10B to be disposed in a small space. Therefore, the dimensions of the structural member 10B are less restricted by the spatial arrangement relationship with other components. Furthermore, when a longitudinal load is input to the structural member 10B, the surface of the second portion 132 of the vertical wall 13 can receive the load, and therefore the structural member 10B can exhibit good transmission capability for loads in the longitudinal direction.

<Fourth Embodiment>

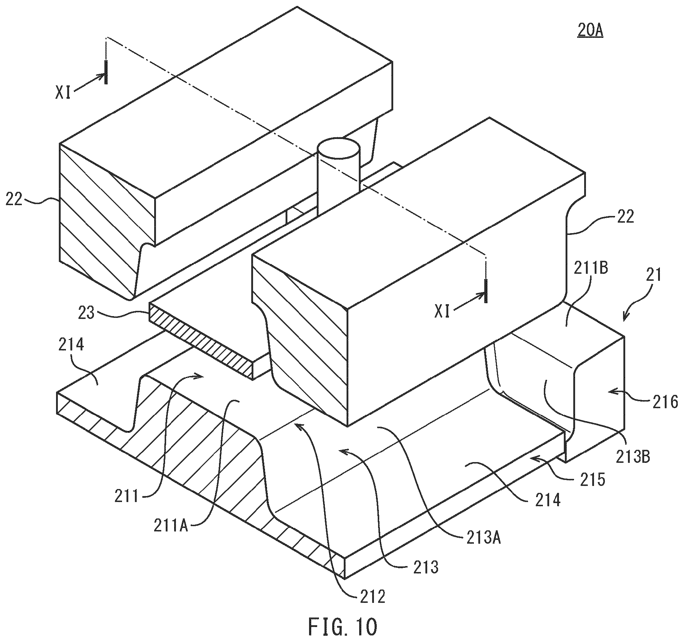

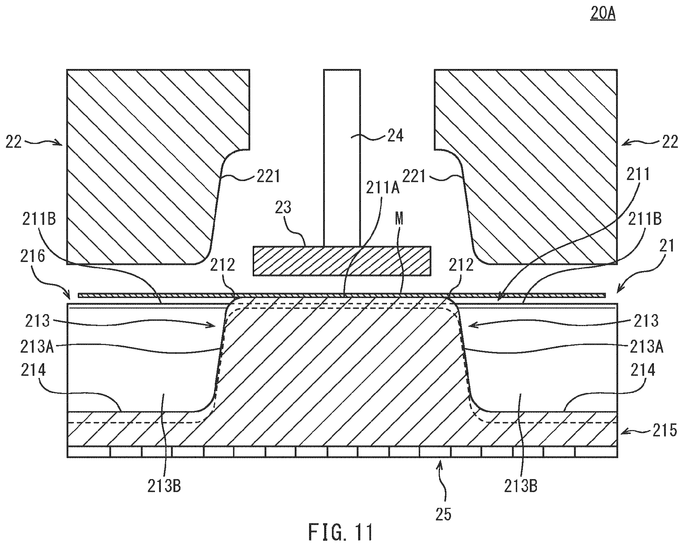

FIG. 10 is a perspective view of a die 20A used in the manufacturing method according to the present embodiment. FIG. 11 is a transverse cross sectional view (XI-XI cross sectional view) of the die 20A. The die 20A differs from the die 20 described in the first embodiment only in the configuration of the lower die 21. The structural members 10, 10A, and 10B according to the above-described embodiments can also be shaped using the die 20A.

As illustrated in FIG. 10, the lower die 21 includes a first lower die 215 and a second lower die 216. The first lower die 215 and the second lower die 216 are separate bodies and can be moved independently. The second lower die 216 includes the projecting portions 211B of the top surface 211. The second lower die 216 also includes the second portions 213B of the side surfaces 213. The second lower die 216 is disposed adjacent to the first lower die 215.

Referring to FIG. 11, the first lower die 215 is configured so as to be able to move upward and downward due to a cushion mechanism 25. The cushion mechanism 25 may be one that is generally used in a known press machine (not shown), and includes, for example, a die cushion, a cushion pin, and the like.

The operation of the die 20A is similar to that of the die 20 in the above embodiments. However, in the die 20A, a height difference is provided in advance between the first lower die 215 and the second lower die 216. More specifically, the first lower die 215 is supported by the cushion mechanism 25 and is positioned slightly higher than the second lower die 216 before the start of the shaping step. Therefore, when the upper dies 22 are lowered toward the first lower die 215 and the second lower die 216, the starting material M is pressed between the upper dies 22 and the first lower die 215 before being pressed between the upper dies 22 and the second lower die 216. At the point when the starting material M is pressed between the upper dies 22 and the first lower die 215, the second lower die 216 does not press the starting material M.

When the upper dies 22 holding the starting material M together with the first lower die 215 is then further moved toward the second lower die 216, the first lower die 215 supported by the cushion mechanism 25 is pressed down by the upper dies 22. As a result, the height difference between the first lower die 215 and the second lower die 216 gradually becomes smaller. When the upper dies 22 reaches bottom dead center, the height difference between the first lower die 215 and the second lower die 216 disappears, and the starting material M is pressed not only by the first lower die 215 but also between the second lower die 216 and the upper dies 22.

In the present embodiment, a height difference is provided in advance between the first lower die 215 and the second lower die 216, and therefore when shaping the structural members 10, 10A, and 10B according to the above embodiments, the first lower die 215 comes into contact with the starting material M before the second lower die 216 that includes the projecting portions 211B of the top surface 211. In this case, the portions of the starting material M that correspond to the projecting portions 211B of the top surface 211 of the lower die 21 (i.e., the portions that are to become the projecting portions 112 of the top plate 11 of the structural members 10, 10A, and 10B) and the vicinity thereof are less likely to be restricted, thereby further promoting the flow of material from the projecting portions 112 of the top plate 11 to the second portions 132 of the vertical walls 13. This therefore makes it possible to further suppress the formation of cracks at the edges of the second portions 132 of the vertical walls 13 extending in the height direction and at the connections between the vertical walls 13 and the flanges 14.

Although embodiments of the present disclosure have been described above, the present disclosure is not limited to the above-described embodiments, and various modifications can be made without departing from the spirit of the present disclosure.

For example, in the first to third embodiments, the projecting portions 112 of the top plate 11 are provided only at one longitudinal end of the structural members 10, 10A, and 10B. However, the projecting portions 112 may be provided at both longitudinal ends of the structural members 10, 10A, and 10B. In this case as well, the structural members 10, 10A, and 10B are hot stamped in a state where the projecting portions 112 are not pressed by the pad 23.

In the case where the projecting portions 112 of the top plate 11 are provided at both longitudinal ends of the structural member 10, 10A, or 10B, the structural member 10, 10A, or 10B can be divided into two after the shaping step. Accordingly, two structural members 10, structural members 10A, or structural members 10B having the projecting portions 112 at only one longitudinal end can be manufactured by performing the shaping step one time.

In the above embodiments, the upper dies 22 are disposed above the lower die 21 while the die 20 or the die 20A is attached to the press machine. Furthermore, when the starting material M is shaped into the structural member 10, 10A, or 10B, the upper dies 22 and the lower die 21 are brought toward each other by moving the upper dies 22 toward the lower die 21. However, as an alternative to the above embodiments, the upper dies 22 may be disposed below the lower die 21. Moreover, the lower die 21 may be moved toward the upper dies 22 to bring the upper dies 22 relatively closer to the lower die 21.

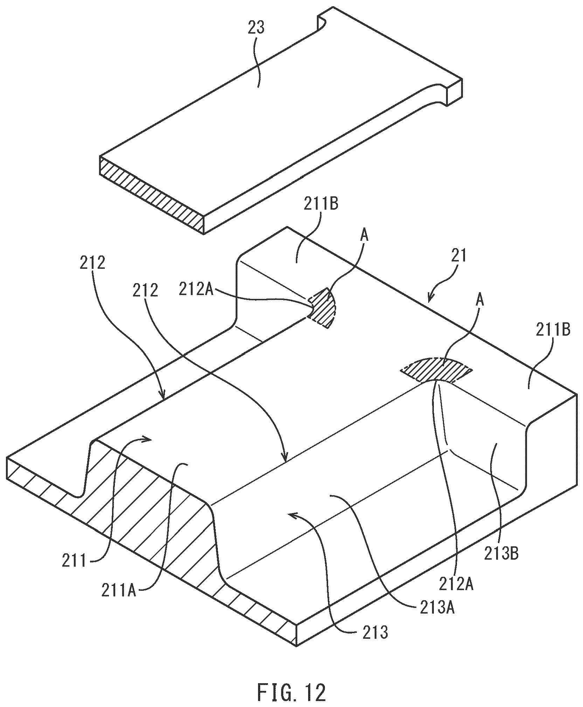

In the above embodiments, the length (width) of the pad 23 in the width direction of the die 20 or the die 20A is substantially constant. However, the width of the pad 23 is not necessarily required to be constant throughout. For example, as illustrated in FIG. 12, the width of the pad 23 may be wider on the side corresponding to the projecting portions 211B of the lower die 21. However, even in this case, the pad 23 is configured so as not to press portions of the starting material that are outward, in the width direction, of the regions A of the lower die 21 adjacent to the corner portions 212A.

EXAMPLES

Hereinafter, the present disclosure will be described in more detail with reference to examples. However, the present disclosure is not limited to the following examples.

[First Example]

In order to confirm effects of the present disclosure, CAE analysis was performed for press shaping of the structural member 10 (FIGS. 1 and 2) according to the first embodiment using commercially available software (press forming simulation system JSTAMP ver2.18, from JSOL Corporation, and LS-DYNA ver971 rev7.12, from ANSYS, Inc.). The analysis conditions and results are shown in Table 1.

[Table 1]

TABLE 1-1

| | Type of starting material | Starting material | Plating type | Sheet thickness t [mm] | Pad shape | Cushion setting | Cushion St. [mm] |
|---|---|---|---|---|---|---|---|
| Example 1 | Steel sheet | 1.5 GPa grade hot stamping steel sheet | Al-Si (aluminum plating) | 2.0 | I-shaped | None | - |
| Example 2 | Steel sheet | 1.5 GPa grade hot stamping steel sheet | Al-Si (aluminum plating) | 2.0 | I-shaped | Yes | 4 |
| Example 3 | Steel sheet | 1.5 GPa grade hot stamping steel sheet | GA (alloyed zinc plating) | 2.0 | I-shaped | None | - |
| Example 4 | Steel sheet | 1.5 GPa grade hot stamping steel sheet | GA (alloyed zinc plating) | 2.0 | I-shaped | Yes | 4 |
| Comparative Example 1 | Steel sheet | 1.5 GPa grade hot stamping steel sheet | Al-Si (aluminum plating) | 2.0 | T-shaped (entirely) | None | - |
| Comparative Example 2 | Steel sheet | 1.5 GPa grade hot stamping steel sheet | GA (alloyed zinc plating) | 2.0 | T-shaped (entirely) | None | - |
| Example 5 | Steel sheet | 2.0 GPa grade hot stamping steel sheet | None | 2.0 | I-shaped | None | - |
| Example 6 | Steel sheet | 2.0 GPa grade hot stamping steel sheet | None | 2.0 | I-shaped | Yes | 4 |
| Example 7 | Steel sheet | 2.0 GPa grade hot stamping steel sheet | Al-Si (aluminum plating) | 1.6 | I-shaped | None | - |
| Example 8 | Steel sheet | 2.0 GPa grade hot stamping steel sheet | GA (alloyed zinc plating) | 1.6 | I-shaped | None | - |

(continued)

| | Type of starting material | Starting material | Plating type | Sheet thickness t [mm] | Pad shape | Cushion setting | Cushion St. [mm] |
|---|---|---|---|---|---|---|---|
| Comparative Example 3 | Steel sheet | 2.0 GPa grade hot stamping steel sheet | Al-Si (aluminum plating) | 2.0 | T-shaped (entirely) | None | - |
| Comparative Example 4 | Steel sheet | 2.0 GPa grade hot stamping steel sheet | None | 2.0 | T-shaped (entirely) | None | - |
| Example 9 | Steel sheet | 1.3 GPa grade hot stamping steel sheet | Al-Si (aluminum plating) | 1.8 | I-shaped | None | - |
| Example 10 | Steel sheet | 1.3 GPa grade hot stamping steel sheet | GA (alloyed zinc plating) | 1.6 | I-shaped | None | - |
| Example 11 | Steel sheet | 1.3 GPa grade hot stamping steel sheet | None | 1.6 | I-shaped | None | - |

TABLE 1-2

| | Maximum sheet thickness reduction rate Tmax | Deformation region R1 [mm] | R1/t | Average Vickers hardness [Hv] | Cracking |
|---|---|---|---|---|---|
| Example 1 | 14% | 7.5 | 3.8 | 410 | None |
| Example 2 | 10% | 5.0 | 2.5 | 394 | None |
| Example 3 | 13% | 7.5 | 3.8 | 406 | None |
| Example 4 | 10% | 7.5 | 3.8 | 401 | None |
| Comparative Example 1 | 31% | 2.0 | 1.0 | 414 | Yes |
| Comparative Example 2 | 29% | 2.0 | 1.0 | 403 | Yes |
| Example 5 | 14% | 10.0 | 5.0 | 525 | None |
| Example 6 | 12% | 10.0 | 5.0 | 542 | None |
| Example 7 | 15% | 7.5 | 4.7 | 522 | None |
| Example 8 | 16% | 7.5 | 4.7 | 544 | None |
| Comparative Example 3 | 31% | 1.8 | 0.9 | 530 | Yes |
| Comparative Example 4 | 28% | 2.0 | 1.0 | 537 | Yes |
| Example 9 | 16% | 7.5 | 4.2 | 327 | None |
| Example 10 | 16% | 5.0 | 3.1 | 330 | None |
| Example 11 | 15% | 5.0 | 3.1 | 340 | None |

In Table 1, the examples with "none" for the cushion setting are examples in which the structural member 10 (FIGS. 1 and 2) was shaped using the die 20 of the first embodiment (FIGS. 3B to 3G). On the other hand, in the examples with "yes" for the cushion setting, the structural member 10 (FIGS. 1 and 2) was shaped using the die 20A of the fourth embodiment (FIGS. 10 and 11). The cushion stroke (cushion St.) is the distance by which the first lower die 215 moves downward due to the cushion mechanism 25, and is equivalent to the size of the height difference between the first lower die 215 and the second lower die 216. In the comparative examples, the structural member 10 was shaped using a die in which only the shape of the pad is different from that of the die 20. The pad 23 of the die 20 is I-shaped in a plan view and is configured so as not to press against the projecting portions 112 of the top plate 11 of the structural member 10, whereas the pad used in the comparative examples is T-shaped in a plan view and is configured to press against substantially the entire surface of the top plate 11. That is, in the comparative examples, the structural member 10 is formed in a state where not only the top plate body 111 but also the projecting portions 112 are pressed by the pad.

As shown in Table 1, in Comparative Examples 1 to 4, in which a pad that was T-shaped in a plan view was used and the projecting portions 112 of the top plate 11 were pressed by the pad while shaping the structural member 10, a crack formed in the second portion 132, which extends in the height direction of the structural member 10, of the vertical wall 13. On the other hand, in Examples 1 to 11, in which the pad 23 that was I-shaped in a plan view was used and the projecting portions 112 of the top plate 11 were not pressed by the pad 23 while shaping the structural member 10, cracks were not formed in the structural member 10.

In Examples 1 to 11, the maximum sheet thickness reduction rate of the edge 132a of the second portion 132 of the vertical wall 13 was significantly smaller than that in Comparative Examples 1 to 4. The maximum sheet thickness reduction rate in Examples 1 to 11 was less than 20%. In addition, in Examples 1 to 11, the length of the deformation region R1 satisfying Formula (1) was 2.0 times or more the sheet thickness t of the starting material. From these results, it can be said that by using the pad 23 that is I-shaped in a plan view and not pressing the projecting portions 112 of the top plate 11 with the pad 23 while shaping the structural member 10, it is possible to suppress a reduction in sheet thickness at the edge 132a of the second portion 132 of the vertical wall 13 and avoid crack formation, and also to make the sheet thickness distribution of the edge 132a uniform.

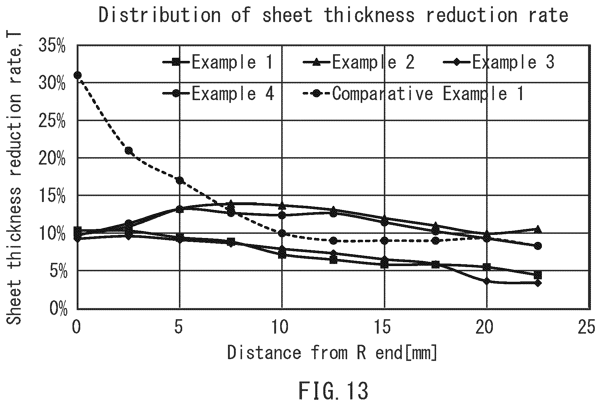

FIG. 13 is a graph showing the relationship between the sheet thickness reduction rate T and the distance from the R end, on the side corresponding to the edge 12a of the ridgeline portion 12, of the edge 132a of the second portion 132 of the vertical wall 13. As illustrated in FIG. 13, in Examples 1 to 4, the change in the sheet thickness reduction rate T was more gradual than in Comparative Example 1. Also, it can be understood from FIG. 13 that the maximum sheet thickness reduction rate of Examples 1 to 4 was significantly smaller than the maximum sheet thickness reduction rate of Comparative Example 1. That is, it can be understood that in Examples 1 to 4, the sheet thickness reduction at the edge 132a of the second portion 132 of the vertical wall 13 was suppressed, and the sheet thickness distribution of the edge 132a was made uniform.

In this analysis, the Vickers hardness HV of the structural member 10 in the examples and the comparative examples was measured by the method described in the first embodiment above. The Vickers hardness HV was determined as the average value of the Vickers hardness [Hv] measured at five points located 5 mm inward from the edge of the top plate 11 on the projecting portion 112 side, namely the center point in the width direction, points 5 mm from the two ends in the width direction, and the midpoint between these points. As shown in Table 1, since the structural member 10 was shaped by hot stamping, the Vickers hardness of the structural member 10 was 325 Hv or more in both the examples and the comparative examples.

In addition, in this analysis, for Example 1 and Comparative Example 1, the Vickers hardness was measured at a region where the sheet thickness reduction rate was largest (maximum sheet thickness reduction rate region) and at a region where no sheet thickness reduction occurred (normal region). In Example 1, the Vickers hardness in the maximum sheet thickness reduction rate region was 360 Hv, and the Vickers hardness in the normal region was 410 Hv. On the other hand, in Comparative Example 1, the Vickers hardness in the maximum sheet thickness reduction rate region was 306 Hv, and the Vickers hardness in the normal region was 414 Hv. From these results, it can be said that when the structural member 10 was formed by the manufacturing method according to the present disclosure, localized reduction in hardness is suppressed by dispersing the reduction in sheet thickness. Therefore, it is possible to expect an effect that, when the structural member 10 undergoes deformation due to a collision, the concentration of deformation will be suppressed. Therefore, it is envisioned that the structural member 10 formed by the manufacturing method according to the present disclosure will have excellent collision resistance.

[Second Example]

The yield of Example 5 was calculated by dividing the weight (kg) of the structural member 10 by the weight (kg) of the metal band (coil) before the blank was cut out as the starting material for press shaping. As a reference example, CAE analysis similar to that described above was carried out for the case where the structural member 10 was shaped by drawing using a die including a punch, a die, and a blank holder, and the yield was also calculated. In addition, for Example 5 and the reference example, the greenhouse gas emission amount ($CO_2$-eq) during the manufacture of the structural member 10 was calculated using a component LCA (Life Cycle Assessment) tool (a tool capable of analyzing the life cycle greenhouse gas emission amount proposed by the Automotive Division of the World Steel Association (WAS), namely an Excel-based analysis software downloaded from the WAS website (https://www.worldautosteel.org/life-cycle-thinking/case-studies/comparing-material-usage-in-production-vehicle-efficient-designs/)). The calculation results are shown in Table 2.

[Table 2]

TABLE 2-1

|  | Type of starting material | Starting material (standard symbol, etc.) | Plating type | Sheet thickness t [mm] | Shaping method | Cushion setting | Cushion St. [mm] |
|---|---|---|---|---|---|---|---|
| Example 5 | Steel sheet | 2.0 GPa grade hot stamping steel sheet (-) | None | 2.0 | I-shaped pad bending | None | - |
| Reference Example | Steel sheet | 2.0 GPa grade hot stamping steel sheet (-) | None | 2.0 | Drawing | Yes (blank holder) | 50 |

TABLE 2-2

|  | Maximum sheet thickness reduction rate Tmax | Deformation region R1 [mm] | R1/t | Cracking | Minimum arithmetic mean roughness Ra [$\mu$m] | Yield | Greenhouse gas emission amount |
|---|---|---|---|---|---|---|---|
| Example 5 | 14% | 10 | 5.0 | None | 1.91 | 82% | 5.80 kg $CO_2$-eq |
| Reference Example | 17% | 3 | 1.5 | None | 4.27 | 58% | 8.01 kg $CO_2$-eq |

In the reference example in which the structural member 10 was formed by drawing, cracks were not formed in the structural member 10, but the yield was significantly lower than in Example 5. This is because in drawing, the blank needs extra material to be gripped by the blank holder and the die, and the coil from which the blank is cut also needs to be larger. In the reference example, after the drawing, the excess material of the shaped product is laser cut away to obtain the shape of the structural member 10. Therefore, the weight of the blank and coil was larger relative to the weight of the structural member 10, and the yield was low at 58%.

On the other hand, in Example 5 in which pad bending shaping was performed using the die 20 including the pad 23 that was I-shaped in a plan view, a higher yield was ensured. In Example 5, the blank does not require excess material for gripping with the blank holder and the die, and cracks were not formed in the structural member 10, and therefore there is no need to perform laser cutting after pad bending. Therefore, the blank cut out from the coil can have a flat shape corresponding to the unshaped structural member 10, and the dimensions of the coil can be made smaller than that in the reference example. In Example 5, the weight of the blank and the coil was smaller relative to the weight of the structural member 10, and the yield was high at 82%.

In Example 5, the weight of the coil is smaller than that of the reference example, and there is no need to perform laser cutting. Therefore, in Example 5, the amount of greenhouse gases emitted during the manufacture of the structural member 10 was also lower than in the reference example.

The arithmetic mean roughness Ra of the edge 132a of the vertical wall 13 was calculated for Example 5 and Reference Example 1 by the method described in the first embodiment. In this example, the arithmetic mean roughness Ra was calculated for a range of ±6.25 mm in the height direction from the center of the edge 132a of the vertical wall 13. As shown in Table 2, in Example 5 in which laser cutting was not performed after shaping, the arithmetic mean roughness Ra was 1.91 $\mu$m at the minimum and 2.10 $\mu$m at the maximum. On the other hand, in the reference example in which laser cutting was performed after shaping, the arithmetic mean roughness Ra was 4.27 $\mu$m at the minimum. Therefore, it was confirmed that when the edge 132a of the vertical wall 13 is not laser cut after hot stamping, the arithmetic mean roughness Ra of the edge 132a of the vertical wall 13 is 3.00 $\mu$m or less.

[Third Example]

The same software as in the first example was used to perform CAE analysis similar to that in the first example for press shaping of a structural member 10B (FIG. 8) according to the third embodiment. The analysis conditions and results are shown in Table 3.

[Table 3]

TABLE 3-1

| | Type of starting material | Starting material (standard symbol, etc.) | Plating type | Sheet thickness t [mm] | Pad shape | Cushion setting |
|---|---|---|---|---|---|---|
| Example 12 | Steel sheet | TWB, 1.3 GPa grade hot stamping steel sheet (-) | GA (alloyed zinc plating) | 1.2 | I-shaped | None |
| Comparative Example 5 | Steel sheet | TWB, 1.3 GPa grade hot stamping steel sheet (-) | GA (alloyed zinc plating) | 1.2 | T-shaped (entirely) | None |

TABLE 3-2

| | Maximum sheet thickness reduction rate Tmax | Deformation region R1 [mm] | R1/t | Average Vickers hardness [Hv] | Minimum arithmetic mean roughness Ra [μm] | Cracking |
|---|---|---|---|---|---|---|
| Example 12 | 25% | 5.0 | 4.2 | 347 | 2.87 | None |
| Comparative Example 5 | 70% | 2.0 | 1.7 | 349 | 6.41 | Yes |

As shown in Table 3, in Comparative Example 5, in which a pad that was T-shaped in a plan view was used and the entire surface of the top plate 11 (top plate body 111 and projecting portions 112) was pressed by the pad while shaping the structural member 10B, a crack formed in the second portion 132, which extends in the height direction of the structural member 10, of the vertical wall 13. On the other hand, in Example 12, in which the pad 23 that was I-shaped in a plan view was used and the projecting portions 112 of the top plate 11 were not pressed by the pad 23 while shaping the structural member 10B, cracks were not formed in the structural member 10B.

Furthermore, in Example 12, the maximum sheet thickness reduction rate at the edge of the second portion 132 of the vertical wall 13 is significantly smaller than that in Comparative Example 5, and the length of the deformation region R1 satisfying Formula (1) was 2.0 times or more the sheet thickness t of the starting material. That is, in Example 12 in which structural member 10B was shaped, similarly to Examples 1 to 11 in which the structural member 10 was shaped, it was possible to suppress a reduction in the sheet thickness at the edge of second portion 132 of the vertical wall 13, and also to make the sheet thickness distribution at the edge uniform.

For both Example 12 and Comparative Example 5, the Vickers hardness HV of the structural member 10B was measured by a method similar to that in the first example. Moreover, for both Example 12 and Comparative Example 5, the arithmetic mean roughness Ra of the edge 132a of the vertical wall 13 was calculated by a method similar to that in the second example.

As shown in Table 3, since the structural member 10B was shaped by hot stamping, the Vickers hardness of the structural member 10B was 325 Hv or more in both Example 12 and Comparative Example 5. The arithmetic mean roughness Ra in Example 12 was 2.87 μm at the minimum and did not exceed 3.00 μm at the maximum. The minimum arithmetic mean roughness Ra in Comparative Example 5 was 6.41 μm.

[Fourth Example]

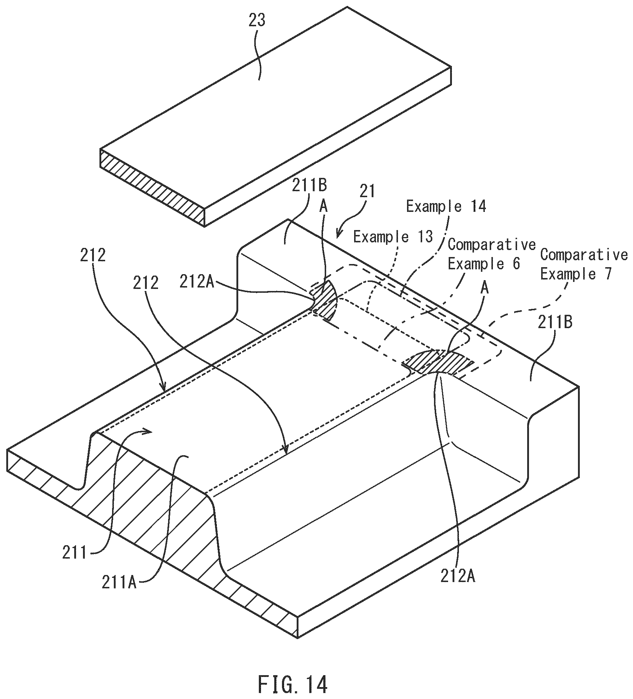

CAE analysis similar to that in the first example was carried out for press shaping of the structural member 10 (FIGS. 1 and 2) according to the first embodiment while changing the range of the starting material that was pressed by the pad 23. The analysis conditions and results are shown in FIG. 14 and Table 4.

[Table 4]

TABLE 4

| | Type of starting material | Starting material | Plating type | Sheet thickness t [mm] | Cushion setting | Maximum sheet thickness reduction rate Tmax | Cracking | Wrinkling |
|---|---|---|---|---|---|---|---|---|
| Example 13 | Steel sheet | 2.0 GPa grade hot stamping steel sheet | Al-Si (aluminum plating) | 2.0 | None | 16% | None | None |
| Example 14 | Steel sheet | 2.0 GPa grade hot stamping steel sheet | Al-Si (aluminum plating) | 2.0 | None | 17% | None | None |
| Comparative Example 6 | Steel sheet | 2.0 GPa grade hot stamping steel sheet | Al-Si (aluminum plating) | 2.0 | None | 17% | None | Yes |
| Comparative Example 7 | Steel sheet | 2.0 GPa grade hot stamping steel sheet | Al-Si (aluminum plating) | 2.0 | None | 29% | Yes | None |

As illustrated in FIG. 14, in Examples 13 and 14, the pad 23 pressed the starting material in at least a part of the regions A adjacent to the corner portions 212A of the shoulder portions 212 of the lower die 21 during the shaping step. In Examples 13 and 14, the starting material was not pressed by the pad 23 outward of the regions A in the width direction of the lower die 21. On the other hand, in Comparative Example 6, the pad 23 was disposed in front of the regions A in the longitudinal direction of lower die 21, and the pad 23 did not press the starting material in the regions A during the shaping step. In Comparative Example 7, the pad 23 extended outward of the regions A in the width direction of the lower die 21, and the pad 23 pressed the starting material not only in the regions A but also outward of the regions A in the width direction during the shaping step.

As shown in Table 4, in Examples 13 and 14, the structural member 10 could be shaped without the formation of cracks or wrinkles. In Examples 13 and 14, shaping defects such as necking did not occur. In contrast, in Comparative Example 7, a crack formed during shaping of the structural member 10. In Comparative Example 6, cracking and necking did not occur, but wrinkling occurred in the structural member 10.

Therefore, it was confirmed that the shaping of the structural member 10 is improved by pressing the starting material with the pad 23 in at least a part of the regions A adjacent to the corner portions 212A of the lower die 21, while not pressing the starting material with the pad 23 outward of the regions A in the width direction of the lower die 21.

REFERENCE SIGNS LIST

10, 10A, 10B: Structural member
11: Top plate
111: Top plate body
111a: Side edge
112: Projecting portion
112a: Edge
12: Ridgeline portion
13: Vertical wall

132a: Edge
14: Flange
20, 20A: Die
21: Lower die
211: Top surface
211A: Top surface body
211a: Side edge
211B: Projecting portion
212: Shoulder portion
213: Side surface
214: Flange surface
215: First lower die
216: Second lower die
22: Upper die
23: Pad
25: Cushion mechanism

**Claims**

1. A manufacturing method for manufacturing a structural member for automobiles, the manufacturing method comprising:

    a heating step of heating a starting material made of a metal sheet; and
    a shaping step of shaping the heated starting material into the structural member using a die,
    wherein the die includes:

        a lower die including a top surface, a shoulder portion, a side surface, and a flange surface, the top surface including a top surface body and a projecting portion projecting outward from a side edge of the top surface body, the shoulder portion being continuous with the side edge of the top surface body and the projecting portion, the side surface being connected to the top surface body and the projecting portion via the shoulder portion, and the flange surface being connected to the side surface on a side opposite to the top surface, a pad facing the top surface body, and
        an upper die disposed on a lateral side of the pad, and

    in the shaping step, while the starting material is sandwiched between the top surface body and the pad, and the starting material is not sandwiched between the projecting portion, the upper die, and the pad, the upper die and the lower die are moved relatively toward each other to press the starting material with the upper die, the shoulder portion, the side surface, and the flange surface.

2. The manufacturing method according to claim 1,

    wherein the lower die includes a first lower die and a second lower die, the second lower die being adjacent to the first lower die and including the projecting portion, and
    by providing a height difference in advance between the first lower die and the second lower die, when the upper die and the lower die are moved relatively toward each other, the starting material is pressed between the first lower die and the upper die before being pressed between the second lower die and the upper die.

3. The manufacturing method according to claim 2,

    wherein the first lower die is configured to move upward and downward due to a cushion mechanism, and
    in the shaping step, the upper die is lowered toward the first lower die and the second lower die.

4. A structural member for automobiles, the structural member comprising:

    a top plate including a top plate body and a projecting portion projecting outward from a side edge of the top plate body;
    a ridgeline portion continuous with the side edge of the top plate body and the projecting portion;

a vertical wall connected to the top plate body and the projecting portion via the ridgeline portion; and
a flange connected to the vertical wall on a side opposite to the top plate, and projecting from the vertical wall in a direction outward from the structural member,
wherein when T [%] is a sheet thickness reduction rate based on a sheet thickness of the top plate body, at an edge of the vertical wall in a portion of the vertical wall continuous with the projecting portion, a length of a region of the edge in which the sheet thickness reduction rate T satisfies the following formula is 2.0 times or more the sheet thickness,

$$0.9 \times \text{Tmax} \leq T \leq \text{Tmax}$$

where Tmax [%] is a maximum value of the sheet thickness reduction rate at the edge of the vertical wall in the portion of the vertical wall continuous with the projecting portion.

5. The structural member according to claim 4,
wherein an arithmetic mean roughness Ra at the edge of the vertical wall in the portion of the vertical wall continuous with the projecting portion is 3.00 μm or less.

6. The structural member according to claim 4 or 5,
wherein the structural member has a Vickers hardness of 325 Hv or more.

Width direction

Longitudinal direction

10

FIG. 1

Width direction

10

112   12   111a   111   11   111a   12   112

132   132

13   13

Height direction

131   131

15   15

14   14

FIG. 2

FIG. 3A

20

IIIC

22

23

IIID

IIIC

22

211B

21

214

211a

211

211A

211a

212

213B

214

213A

213

FIG. 3B

FIG. 3C

FIG. 3D

FIG. 3E

FIG. 3F

FIG. 3G

FIG. 3H

FIG. 4

FIG. 5

Width direction

112

10A

132

Longitudinal direction

112

111

12

132

11

13

13

13

12

131

14

14

14

FIG. 6

Width direction

10A

112

132

Longitudinal direction

112

111

12

132

11

16

13

12

131

13

14

14

FIG. 7

FIG. 8

FIG. 9

FIG. 10

20A

FIG. 11

FIG. 12

## Distribution of sheet thickness reduction rate

FIG. 13

FIG. 14

# INTERNATIONAL SEARCH REPORT

International application No.

**PCT/JP2022/042159**

| A. | CLASSIFICATION OF SUBJECT MATTER |
|---|---|

*B21D 22/26*(2006.01)i; *B21D 22/20*(2006.01)i; *B62D 25/04*(2006.01)i
FI:   B21D22/26 D; B21D22/20 H; B62D25/04

According to International Patent Classification (IPC) or to both national classification and IPC

| B. | FIELDS SEARCHED |
|---|---|

Minimum documentation searched (classification system followed by classification symbols)

B21D22/26; B21D22/20; B62D25/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2010-36217 A (SUMITOMO METAL INDUSTRIES, LTD.) 18 February 2010 (2010-02-18)<br>    paragraphs [0031], [0039]-[0046], fig. 1-3 | 1-6 |
| A | WO 2019/225661 A1 (JFE STEEL CORPORATION) 28 November 2019 (2019-11-28)<br>    entire text, all drawings | 1-6 |
| A | JP 2020-152173 A (JFE STEEL CORPORATION) 24 September 2020 (2020-09-24)<br>    entire text, all drawings | 1-6 |
| X | JP 2013-35068 A (NIPPON STEEL & SUMITOMO METAL CORPORATION) 21 February 2013 (2013-02-21)<br>    paragraphs [0001], [0003], [0013], [0026]-[0029], [0032], [0038]-[0039], fig. 2, 6 | 4-6 |
| A |     paragraphs [0001], [0003], [0013], [0026]-[0029], [0032], [0038]-[0039], fig. 2, 6 | 1-3 |
| A | WO 2015/174353 A1 (NIPPON STEEL & SUMITOMO METAL CORPORATION) 19 November 2015 (2015-11-19)<br>    entire text, all drawings | 1-6 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/042159**

| Box No. III | Observations where unity of invention is lacking (Continuation of item 3 of first sheet) |

This International Searching Authority found multiple inventions in this international application, as follows:

(Invention 1) Claims 1-3
Claims 1-3 are classified as invention 1 due to having the special technical feature in which "in the molding step, in a state in which the material is clamped between the top surface body and the pad, and the material is not clamped between the overhang part and the upper mold/the pad, the upper mold and the lower mold are caused to relatively approach each other, and the material is pressed between the upper mold and the shoulder part, side surface, and flange surface".

(Invention 2) Claims 4-6
Claims 4-6 share the technical feature relating to a "structural member for a motor vehicle" of a prescribed shape.
However, this technical feature does not make a contribution over the prior art in the light of the content disclosed in document 1 (JP 2010-36217), and thus this technical feature cannot be said to be a special technical feature.
Furthermore, there are no other identical or corresponding special technical features between these inventions.
Additionally, claims 4-6 do not cite claim 1, and claims 4-6 are also not substantially identical to or similarly closely related to any of the claims classified as invention 1.
Therefore, claims 4-6 cannot be classified as invention 1, and thus are classified as invention 2.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**      [ ] The additional search fees were accompanied by the applicant's protest and, where applicable, the payment of a protest fee.

[ ] The additional search fees were accompanied by the applicant's protest but the applicable protest fee was not paid within the time limit specified in the invitation.

[✓] No protest accompanied the payment of additional search fees.

Form PCT/ISA/210 (continuation of first sheet) (January 2015)

INTERNATIONAL SEARCH REPORT
Information on patent family members

International application No.

**PCT/JP2022/042159**

| Patent document cited in search report | | | Publication date (day/month/year) | Patent family member(s) | | | Publication date (day/month/year) |
|---|---|---|---|---|---|---|---|
| JP | 2010-36217 | A | 18 February 2010 | (Family: none) | | | |
| WO | 2019/225661 | A1 | 28 November 2019 | US entire text, all drawings | 2021/0316352 | A1 | |
| | | | | EP | 3804875 | A1 | |
| | | | | KR | 10-2020-0141513 | A | |
| | | | | CN | 112154036 | A | |
| JP | 2020-152173 | A | 24 September 2020 | US entire text, all drawings | 2022/0152680 | A1 | |
| | | | | EP | 3925866 | A1 | |
| | | | | KR | 10-2021-0124326 | A | |
| | | | | CN | 113631466 | A | |
| JP | 2013-35068 | A | 21 February 2013 | US paragraphs [0001], [0004], [0074], [0098]-[0101], [0111], [0119], fig. 2, 6 | 2012/0297853 | A1 | |
| | | | | EP | 2572811 | A1 | |
| | | | | AU | 2011255898 | A | |
| | | | | TW | 201206585 | A | |
| | | | | CN | 102791396 | A | |
| | | | | MX | 2012009036 | A | |
| | | | | KR | 10-2012-0140236 | A | |
| | | | | RU | 2012133251 | A | |
| | | | | ZA | 201205651 | B | |
| | | | | BR | 112012021712 | A2 | |
| | | | | ES | 2741881 | T3 | |
| WO | 2015/174353 | A1 | 19 November 2015 | US entire text, all drawings | 2017/0151597 | A1 | |
| | | | | EP | 3144078 | A1 | |
| | | | | KR | 10-2016-0145130 | A | |
| | | | | CN | 106457341 | A | |
| | | | | MX | 2016014730 | A | |
| | | | | RU | 2016144269 | A | |

Form PCT/ISA/210 (patent family annex) (January 2015)

## REFERENCES CITED IN THE DESCRIPTION

**Patent documents cited in the description**

- JP 6436166 B
- JP 5958644 B
- JP 2019013952 A